# EUROPÄISCHE PATENTANMELDUNG

(11) **EP 1 752 814 A1**
(43) Veröffentlichungstag der Anmeldung: **14.02.2007**
(21) Anmeldenummer: 06118065.9
(22) Anmeldetag: 28.07.2006
(51) Int. Cl.: G02B 27/30, G02B 7/02, G02B 7/00

(54) **Justierbare optische Baugruppe mit elastischem Deformationsstegen**

(30) Priorität: 09.08.2005 DE 102005037631
(71) Anmelder: HILTI Aktiengesellschaft, 9494 Schaan (LI)
(72) Erfinder: Häfele, Christian, 6800, Feldkirch (AT); Steffen, Roman, 9445, Rebstein (CH)
(74) Vertreter: Wildi, Roland

(57) **Zusammenfassung**

Eine bezüglich einer Achse (A) justierbare optische Baugruppe mit einem Optikträger (1), mit welchem zumindest zwei optische Bauelemente (2, 3) fest verbunden sind, wobei der Optikträger (1) im axialen Zwischenbereich (X) zwischen den beiden Bauelementen (2, 3) zumindest einen dünnen, zumindest teilweise tangential orientierten Deformationssteg (4) aufweist.

## Beschreibung

Die Erfindung bezeichnet eine justierbare optische Baugruppe, insbesondere eine fokussierbare Kollimatoroptik für Laserdioden.

Laserdioden benötigen zur Parallelisierung des Strahlungsbündels zusätzlich eine Kollimatoroptik. Bei einer Kollimatoroptik muss nach der Montage der Laserdiode sowie der Kollimatorlinse in einem Optikträger eine Justierung der gegenseitigen Lage zueinander erfolgen, die axiale Verschiebungen (Fokus) und Neigungen aufweist.

Bei einfachen Kollimatoroptiken werden bei der Herstellung die Laserdioden und die Kollimatorlinse erst nach dem Justieren fixiert. Dieser Fixierungsprozess, bspw. ein Verkleben, benötigt eine Zeitspanne, welche bei der Massenproduktion störend ist.

Nach der DE9002698U ist bei einer Kollimatoroptik ein Zentrierring der Laserdiode vorgesehen, der von einem Haltebauteil im Gehäuse axial festlegbar ist und mit Hilfe der Einstellelemente, die mit einer Umfangsfläche des Zentrierrings zusammenwirken, in der XY-Ebene verstellt werden kann. Diese, jederzeit nachjustierbare Kollimatoroptik besteht aus vielen einzelnen Komponenten.

Nach der US6657788 weist eine justierbare optische Baugruppe mit einer Kollimatoroptik und einem Prisma zwischen diesen dünne, axial orientierte sowie deformierbare Deformationsstege auf, die sich um, in einer als Optikträger dienenden Zylinderhülse umfänglich versetzte, Löcher ausbilden, durch welche vom Prisma reflektierte Teilstrahlen austreten. Eine Justierung der Kollimatoroptik erfolgt über die plastisch deformierten Deformationsstege nicht.

Die Aufgabe der Erfindung besteht in der Realisierung einer einfachen und zur Massenproduktion geeigneten justierbaren optischen Baugruppe mit grossem Justierbereich.

Die Aufgabe wird im Wesentlichen durch die Merkmale des Anspruchs 1 gelöst. Vorteilhafte Weiterbildungen ergeben sich aus den Unteransprüchen.

So weist eine bezüglich einer Achse justierbare optische Baugruppe einen Optikträger auf, mit welchem zumindest zwei optische Bauelemente fest verbunden sind, wobei der Optikträger im axialen Zwischenbereich zwischen den beiden Bauelementen zumindest einen dünnen, zumindest teilweise tangential orientierten Deformationssteg aufweist.

Durch tangential orientierte Deformationsstege kann bezüglich axialen Deformationsstegen eine relativ grosse Versetzung bereits über kleine Scherdeformationen erzielt werden, wodurch sich ein grosser Justierbereich ergibt.

Vorteilhaft ist der Optikträger im wesentlichen hülsenförmig (hohlzylindrisch oder hohlprismatisch), wodurch passend ausgeformte Bauelemente koaxial im Inneren angeordnet werden können. Zudem entspricht eine derartige Form der axialen Symmetrie.

Vorteilhaft sind mehrere, umfänglich zur Achse verteilte tangential orientierte Deformationsstege vorhanden, wodurch das Biegeträgheitselement des Optikträgers im Zwischenbereich erhöht wird.

Vorteilhaft bilden die tangential orientierten Deformationsstege einen umlaufenden Deformationsring aus, wodurch über Ringspannungen allfällige tangentiale Normalspannungen ausgeglichen werden.

Vorteilhaft ist der umlaufende Deformationsring axial beidseitig je über zumindest drei, umlaufend jeweils versetzte Stützen mit dem Optikträger verbunden, wodurch jeweils das Biegeträgheitselement des Optikträgers am Rand des Zwischenbereiches erhöht wird.

Vorteilhaft sind genau sechs jeweils um 60° versetzte Stützen vorhanden, welche weiter vorteilhaft je Axialseite in Gruppen von je drei um 120° versetzte Stützen angeordnet sind, wodurch die scherdeformierbare Tangentiallänge maximiert wird.

Vorteilhaft besteht der Optikträger aus einem hochelastischen Material wie bspw. der in hexagonaler Kristallstruktur vorliegende Zink-Druckguss, wodurch relativ zu anderen Materialien grosse Deformationen im Elastizitätsbereich liegen und somit reversibel sind.

Vorteilhaft sind zumindest drei, sich axial über den Zwischenbereich mit dem zumindest einem Deformationssteg erstreckende Justiermittel (Keile, Schrauben, Gewindestifte, Kugeln, etc.) vorhanden, weiter vorteilhaft in Form von Keilen gleichen Materials, wodurch vermittelt über die Elastizität des Zwischenbereichs und der Haftreibung eine reversible sowie stabile Justierung der Baugruppe möglich ist.

Alternativ vorteilhaft besteht der Optikträger aus einem hochplastischen Material wie bspw. dem in kubisch flächenzentrierter Kristallstruktur vorliegendem Kupfer-Druckguss, wodurch relativ zu anderen Materialien bei plastischen Deformationen nur kleine Rückfederungen auftreten und somit irrreversibel sind.

Vorteilhaft ist die Baugruppe eine justier- und fokussierbare Kollimatoroptik mit einer Kollimatorlinse und einer Laserdiode, wodurch eine zur Massenproduktion geeignete justierbare fokussierte Strahlquelle realisiert ist.

Die Erfindung wird bezüglich eines vorteilhaften Ausführungsbeispiels näher erläutert mit:
Fig. 1 als optische Baugruppe in Seitenansicht
Fig. 2 als Querschnitt in der Ebene II - II der Fig. 1

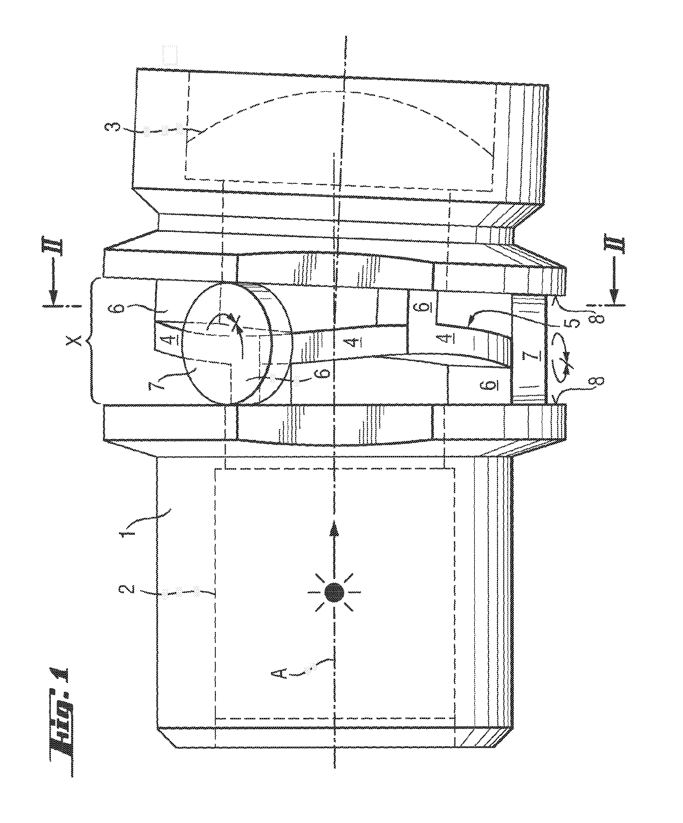

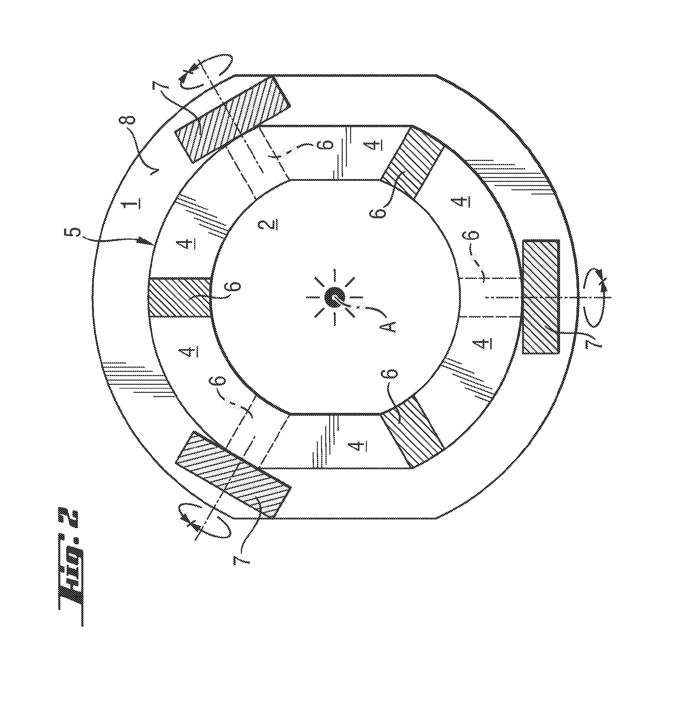

Nach Fig. 1 und Fig. 2 weist eine bezüglich einer Achse A geneigt justierte optische Baugruppe in Form einer fokussierbaren Kollimatoroptik einen hülsenförmigen Optikträger 1 aus Metall auf, mit welchem koaxial im Inneren zwei optische Bauelemente in Form einer Laserdiode 2 und einer Kollimatorlinse 3 fest verbunden sind. Der Optikträger 1 weist im axialen Zwischenbereich X zwischen den beiden Bauelementen mehrere dünne, tangential orientierte Deformationsstege 4 auf, die zusammen einen umlaufenden Deformationsring 5 ausbilden. Der umlaufende Deformationsring 5 ist axial beidseitig je über je drei, umlaufend jeweils um 60° versetzte Stützen 6 (je einer verdeckt im Hintergrund) mit dem Optikträger 1 verbunden. An jeder Axialseite sind je drei um 120° versetzte Stützen 6 angeordnet. Zusätzlich sind drei, umlaufend jeweils um 120° versetzte, sich axial über den Zwischenbereich X erstreckende Justiermittel 7 in Form von unrunden Drehkeilen vorhanden, die reibkraftschlüssig an Axialflächen 8 im Optikträger 1 verspannt sind.

## Patentansprüche

1. Bezüglich einer Achse (A) justierbare optische Baugruppe mit einem Optikträger (1), mit welchem zumindest zwei optische Bauelemente (2, 3) fest verbunden sind, **dadurch gekennzeichnet, dass** der Optikträger (1) im axialen Zwischenbereich (X) zwischen den beiden Bauelementen (2, 3) zumindest einen dünnen, zumindest teilweise tangential orientierten Deformationssteg (4) aufweist.

2. Baugruppe nach Anspruch 1, **dadurch gekennzeichnet, dass** der Optikträger (1) hülsenförmig ist.

3. Baugruppe nach Anspruch 1 oder 2, **dadurch gekennzeichnet, dass** mehrere, umfänglich zur Achse (A) verteilte tangential orientierte Deformationsstege (4) vorhanden sind.

4. Baugruppe nach Anspruch 3, **dadurch gekennzeichnet, dass** die tangential orientierten Deformationsstege (4) einen umlaufenden Deformationsring (5) aus bilden.

5. Baugruppe nach Anspruch 4, **dadurch gekennzeichnet, dass** der umlaufende Deformationsring (5) axial beidseitig je über zumindest drei, umlaufend jeweils versetzte Stützen (6) mit dem Optikträger (1) verbunden ist.

6. Baugruppe nach Anspruch 5, **dadurch gekennzeichnet, dass** genau sechs jeweils um 60° versetzte Stützen (6) vorhanden sind, welche je Axialseite in Gruppen von je drei um 120° versetzte Stützen (6) angeordnet sind.

7. Baugruppe nach einem der Ansprüche 1 bis 6, **dadurch gekennzeichnet, dass** der Optikträger (1) aus einem hochelastischen Material besteht.

8. Baugruppe nach Anspruch 7, **dadurch gekennzeichnet, dass** zumindest drei, sich axial über den Zwischenbereich (X) erstreckende Justiermittel (7) vorhanden sind.

9. Baugruppe nach einem der Ansprüche 1 bis 6, **dadurch gekennzeichnet, dass** der Optikträger (1) aus einem hochplastischen Material besteht.

10. Baugruppe nach einem der Ansprüche 1 bis 9, **dadurch gekennzeichnet, dass** sie eine justier- und fokussierbare Kollimatoroptik mit einer Kollimatorlinse (3) und einer Laserdiode (2) ist.
